(19) Europäisches Patentamt
European Patent Office
Office européen des brevets

(11) Veröffentlichungsnummer: **0 150 016**
**A2**

(12) # EUROPÄISCHE PATENTANMELDUNG

(21) Anmeldenummer: **85100172.7**

(22) Anmeldetag: **09.01.85**

(51) Int. Cl.⁴: **E 03 D 11/13**
C 09 J 5/08
//A01N47/04, A01N47/18

(30) Priorität: **21.01.84 DE 3402071**

(43) Veröffentlichungstag der Anmeldung:
**31.07.85 Patentblatt 85/31**

(84) Benannte Vertragsstaaten:
**AT BE CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Kapps, Manfred, Dr.**
**Hoppersheider Weg 55**
**D-5060 Bergisch Gladbach(DE)**

(72) Erfinder: **Gruss, Peter**
**Dechant-Krey-Strasse 16**
**D-5090 Leverkusen 3(DE)**

(72) Erfinder: **Philippen, Dieter P.**
**Wildbachstrasse 7**
**D-5580 Traben-Trarbach(DE)**

(54) **Verfahren zur Montage eines Sanitärkörpers.**

(57) Die Erfindung betrifft ein Verfahren zur Montage eines einen der Montagebasis zugewandten, von einem durchgehenden Rand umgebenen Hohlraum aufweisenden Sanitärkörpers, insbesondere eines solchen aus Porzellan sowie insbesondere zur Bodenmontage eines Wasserklosetts, bei dem der Sanitärkörper auf die gereinigte Montagebasis aufgesetzt wird und die erforderlichen sanitären Anschlüsse hergestellt werden, wobei in den Hohlraum des Sanitärkörpers Klebeschaumstoff eingebracht wird, der den Hohlraum ausfüllt und die dem Hohlraum zugekehrte Wandung haftend mit der Montagebasis verbindet, dadurch gekennzeichnet, daß als Klebeschaumstoff ein solcher verwendet wird, der einen Wirkstoff oder eine Wirkstoffkombination auf Basis von N-(Halogenmethyl)thiophthalimid enthält.

EP 0 150 016 A2

BAYER AKTIENGESELLSCHAFT 5090 Leverkusen, Bayerwerk
Konzernverwaltung RP
Patentabteilung GM/Kü-c

## Verfahren zur Montage eines Sanitärkörpers

Die Erfindung betrifft ein Verfahren zur Montage eines einen der Montagebasis zugewandten, von einem durchgehenden Rand umgebenen Hohlraum aufweisenden Sanitärkörpers, insbesondere eines solchen aus Porzellan sowie insbesondere zur Bodenmontage eines Wasserklosetts, bei dem der Sanitärkörper auf die gereinigte Montagebasis aufgesetzt wird und die erforderlichen sanitären Anschlüsse hergestellt werden, wobei ein spezieller, antimikrobiell ausgerüsteter Klebeschaumstoff eingesetzt wird.

Ein Montageverfahren dieser Art ist durch die DE-OS 24 29 116 bekannt. Dabei wird ein Schenkel eines im Querschnitt etwa L-förmigen Kunststoffringes auf die Montagebasis aufgeklebt, während der andere Schenkel nach oben weist und mehr oder weniger stark zur Ringmittel konvergiert. In diesen Ring wird der Sanitärkörper mit seinem unteren Rand eingesetzt, wobei der im wesentlichen nach oben weisende Schenkel des Ringes an der Außenseite des Sanitärkörpers elastisch anliegt.

Gemäß der veröffentlichten europäischen Patentanmeldung 00 80 677 wird in den Hohlraum des Sanitärkörpers ein Klebeschaumstoff eingebracht, der den Hohlraum ausfüllt und die dem Hohlraum zugekehrte Wandung haftend mit der Montagebasis verbindet.

Hierbei übernimmt der verwendete Klebeschaumstoff, bei dem es sich um ein Ein- oder ein Mehrkomponenten-Material handeln kann, das nach dem Einbringen eine Schaumstruktur ausbildet, zum einen die Funktion der kraftschlüssigen Festlegung des Sanitärkörpers an der Montagebasis, also insbesondere auf dem Boden. Die gesamte von dem Rand des Sanitärkörpers eingeschlossene Montagebasis ist Kontakt- und Klebefläche zur Festlegung des Sanitärkörpers. Neben der Festlegung des Sanitärkörpers an der Montagebaiss bewirkt der Klebeschaumstoff ferner noch eine hohe Schalldämmung. Überdies hat das erfindungsgemäße Verfahren eine erhebliche Reduzierung der Montagezeit zur Folge. Die Einsparung an Montagezeit beträgt zum Beispiel bei der Bodenmontage eines Wasserklosetts mehr als 50 % gegenüber dem bisher üblichen Montageverfahren. Der den Hohlraum ausfüllende Klebeschaumstoff bewirkt ferner bei Wasserklosetts eine Geruchssperre zwischen dem im Hohlraum liegenden Rohranschluß und dem Raum, in dem sich das Klosett befindet.

Der Klebeschaumstoff kann auch durch eine verschließbare Öffnung in der Wandung des Sanitärkörpers in den Hohlraum eingespritzt werden.

Nach dem Aufsetzen des Sanitärkörpers auf die Montagebasis kann die Stoßfuge zwischen Sanitärkörper und Montagebasis auch z.B. durch ein Klebeband geschlossen werden, welches nach dem Einspritzen des Klebeschaumstoffs und dessen Verfestigung entfernt wird. Auf diese Weise wird eine saubere Abgrenzung für die Ausschäumung auch in Spalten unterhalb des unteren Randes des Sanitärkörpers sichergestellt. Es ergeben sich somit glatte, leicht sauber zu haltende Flächen am unteren Rand des montierten Sanitärkörpers.

Ferner kann zwischen dem Rand des Sanitärkörpers und der Montagebasis eine Abdichtung vorgenommen werden. Auf diese Weise ist es möglich, ebenso wie bei Verwendung eines Klebebandes ein Ausfließen des Klebeschaumstoffs selbst dann zu verhindern, wenn zwischen dem Rand des Sanitärkörpers und der Montagebasis Durchtrittsöffnungen aufgrund von Unebenheiten bestehen.

Es kann auch zur Abdichtung ein auf den Rand aufsteckbares elastisches Dichtprofil verwendet werden. Auf diese Weise läßt sich leicht die gewünschte Abdichtung erzielen, indem Unebenheiten zwischen dem Rand und der Montagebasis elastisch ausgeglichen werden.

Das Dichtprofil kann z.B. als Meterware vorliegen und für die jeweilige Montage entsprechend der Länge des Randes abgelängt werden. Es ist dabei also nicht erforderlich, spezielle Längen der Dichtprofile bereitzuhalten.

Der Klebeschaumstoff kann eine flüssigkeitsdichte Außenhaut bilden. Somit wird sichergestellt, daß keine Flüssigkeit in den Klebeschaumstoff eindringen kann.

Es ist auch bekannt, einen Klebeschaumstoff zu verwenden, der für Krankheitserreger tötend oder hemmend wirkt. Auf diese Weise kann erhöhten Hygieneanforderungen ensprochen werden. Dies kann z.B. dadurch geschehen, daß dem Klebeschaumstoff eine Komponente zugegeben wird, die für Krankheitserreger tötend oder hemmend wirkt.

Es wurde nun gefunden, daß sich insbesondere solche Klebeschaumstoffe bewähren, die Wirkstoffe oder Wirkstoffkombinationen auf Basis von N-(Halogenmethyl)-thiophthalimid enthalten. Die antimikrobiellen, insbesondere pilz- und bakterientötenden und -abweisenden Eigenschaften der Klebeschaumstoffe werden hierdurch stark verbessert.

Gegenstand der Erfindung ist somit ein Verfahren zur Montage eines einen der Montagebasis zugewandten, von einem durchgehenden Rand umgebenen Hohlraum aufweisenden Sanitärkörpers, insbesondere eines solchen aus Porzellan sowie insbesondere zur Bodenmontage eines Wasserklosetts, bei dem der Sanitärkörper auf die gereinigte Montagebasis aufgesetzt wird und die erforderlichen sanitären Anschlüsse hergestellt werden, wobei in den Hohlraum des Sanitärkörpers Klebeschaumstoff eingebracht wird, der den Hohlraum ausfüllt und die dem Hohlraum zugekehrte Wandung haftend mit der Montagebasis verbindet, dadurch gekennzeichnet, daß als Klebeschaumstoff ein solcher verwendet wird, der einen Wirkstoff oder eine Wirkstoffkombination auf Basis von N-(Halogenmethyl)-thiophthalimid enthält.

Als N-Halogenmethyl-thiophthalimide kommen bevorzugt Verbindungen der allgemeinen Formel

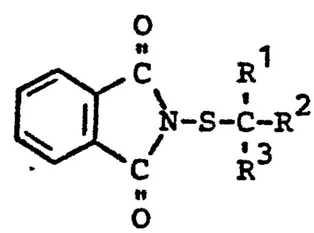

worin

$R^1$, $R^2$ und $R^3$ gleich oder verschieden sind und Fluor- oder Chlor bedeuten

in Betracht.

Im allgemeinen enthält der Klebeschaumstoff 0,1 - 5 Gew.-% N-(Halogenmethyl)-thiophthalimid.

Erfindungsgemäß findet besonders bevorzugt als N-(Halogenmethyl)-thiophthalimid N-(Fluordichlormethyl)-thiophthalimid Anwendung.

Als Wirkstoffkombination ist gemäß Erfindung eine solche bevorzugt, bestehend aus einem Benzimidazolylalkylcarbamat der Formel

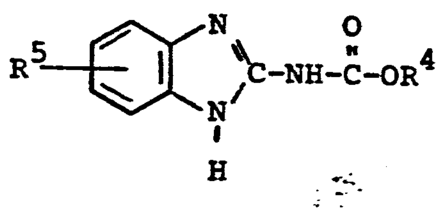

worin

$R^4$ einen Alkylrest mit 1 bis 4 Kohlenstoffatomen, der gegebenenfalls durch den Rest $-OR^6$ substituiert ist, wobei $R^6$ für einen Alkylrest mit 1 bis 4 Kohlenstoffatomen oder den Phenylrest steht, und

$R^5$ Wasserstoff, einen Alkylrest mit 1 bis 4 Kohlenstoffatomen, Halogen oder die Nitrogruppe bedeuten, und

einem Halogenmethyl-thiophthalimid der Formel

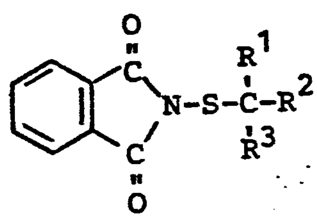

worin

$R^1$, $R^2$ und $R^3$ gleich oder verschieden sind und Fluor oder Chlor bedeuten (vgl. DE-OS 26 07 033)

Vorzugsweise entfallen in dieser Wirkstoffkombination auf 1 Gewichtsteil 2-Benzimidazolyl-alkylcarbamat 1 bis 25 Gewichtsteile Halogenmethyl-thiophthalimid.

Die Herstellung von N-(Halogenmethyl)-thiophthalimid ist bekannt (DE-AS 1 193 498 und DE-AS 1 197 458).

Es ist auch bereits bekannt, Kunststoffe allgemein, darunter auch Polyurethane, mit N-(Fluordichlormethyl)-thiophthalimid antimikrobiell auszurüsten.

Bei der Erfindung geht es speziell um einen Klebeschaumstoff, der besondere physikalische und chemische Eigenschaften aufweisen muß. Mit dem Klebestoff sollen bodenständige Sanitärelemente bodenverbunden und gegen den ständigen Angriff von Reinigungsmitteln, verbunden mit unbehandeltem Wasser, allgemein resistent gemacht werden. Diese Resistenz ist bei einem Schaumstoff deshalb besonders problematisch, weil die Dichte eines Schaumstoffes relativ gering ist, so daß Mikroben einen günstigen Wohnraum im Schaumstoffskelett randständig auffinden.

Es hat sich auch in den praktischen Versuchen gezeigt, daß die üblichen unterschiedlichen Beimengungen von antimikrobiellen Stoffen nicht allgemein befriedrigen, weil die Aufgabe gestellt werden muß, daß die von der Natur des Schaumstoffes her dünnen Zellmembranen nicht von Bakterien durchdrungen werden.

Die erfindungsgemäß verwendeten Substanzen haben eine ausgezeichnete Barrierewirkung, mit der Maßgabe, daß auch

Fliegen-, Maden- und Würmerbesatz, der an sich nicht zu vermeiden ist, keinerlei nachteilige Auswirkung zeigt.

Dabei ist zu beachten, daß der kraftschlüssige Schaumstoff nach der Aushärtung nicht frei ist von mechanischen Einwirkungen. Diese Einwirkungen ergeben sich regelmäßig durch die Druckbelastung des montierten Gerätes bei Benutzung, so daß es sich nicht um ein starres Schaumgerüst handelt, vielmehr um ein solches, das durch die Schwerkraftwirkung des menschlichen Körpers Druckbelastungen und Druckentlastungen sowie Biegebelastungen ausgesetzt ist. Es ist bemerkenswert, daß der auf diese Weise "elastische", jedenfalls nicht starre Schaum seine antimikrobielle Wirkung beibehält.

Eine umfangreiche Versuchsserie hat erwiesen, daß dieser Schaum in der Montagesituation keine Feuchtigkeit aufnimmt.

Erfindungsgemäß wird vorzugsweise als Klebeschaumstoff Polyurethanschaum verwendet, dem zusätzliche Haftmittel beigegeben werden können.

Das erfindungsgemäße Verfahren eignet sich in besonderer Weise für die Montage von WC-Porzellankörpern, ist aber auch für die Montage anderer Sanitärkörper auf dem Boden oder an Wänden einsetzbar.

Patentansprüche

1. Verfahren zur Montage eines einen der Montagebasis zugewandten, von einem durchgehenden Rand umgebenen Hohlraum aufweisenden Sanitärkörpers, insbesondere eines solchen aus Porzellan sowie insbesondere zur Bodenmontage eines Wasserklosetts, bei dem der Sanitärkörper auf die gereinigte Montagebasis aufgesetzt wird und die erforderlichen sanitären Anschlüsse hergestellt werden, wobei in den Hohlraum des Sanitärkörpers Klebeschaumstoff eingebracht wird, der den Hohlraum ausfüllt und die dem Hohlraum zugekehrte Wandung haftend mit der Montagebasis verbindet, dadurch gekennzeichnet, daß als Klebeschaumstoff ein solcher verwendet wird, der einen Wirkstoff oder eine Wirkstoffkombination auf Basis von N-(Halogenmethyl)-thiophthalimid enthält.

2. Verfahren gemäß Anspruch 1, dadurch gekennzeichnet, daß der Wirkstoff ein N-Halogenmethyl-thiophthalimid der Formel

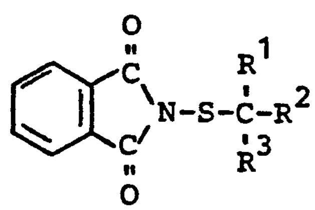,

worin

$R^1$, $R^2$ und $R^3$ gleich oder verschieden sind und Fluor oder Chlor bedeuten,

ist.

3. Verfahren gemäß Anspruch 1, dadurch gekennzeichnet, daß als N-(Halogenmethyl)-thiophthalimid N-(Fluordichlormethyl)-thiophthalimid verwendet wird.

4. Verfahren gemäß Anspruch 1 - 3, dadurch gekennzeichnet, daß als Wirkstoffkombination eine solche bestehend aus einem Benzimidazolylalkylcarbamat der Formel

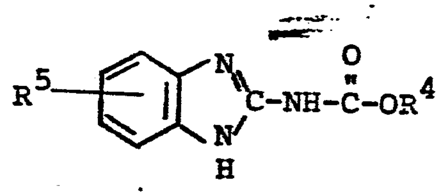

worin

$R^4$ einen Alkylrest mit 1 bis 4 Kohlenstoffatomen, der gegebenenfalls durch den Rest $-OR^6$ substituiert ist,
wobei $R^6$ für einen Alkylrest mit 1 bis 4 Kohlenstoffatomen oder den Phenylrest steht, und

$R^5$ Wasserstoff, einen Alkylrest mit 1 bis 4 Kohlenstoffatomen, Halogen oder die Nitrogruppe bedeuten, und

einem Halogenmethyl-thiophthalimid der Formel

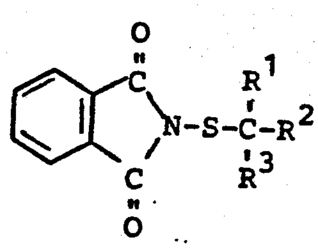

worin

$R^1$, $R^2$ und $R^3$ gleich oder verschieden sind und Fluor oder Chlor bedeuten

verwendet wird.

5. Verfahren gemäß Anspruch 4, dadurch gekennzeichnet, daß in der Wirkstoffkombination auf 1 Gewichtsteil 2-Benzimidazolyl-alkylcarbamat 1 bis 25 Gewichtsteile Halogenmethylthiophthalimid entfallen.

6. Verfahren nach Anspruch 1 - 5, dadurch gekennzeichnet, daß der Klebeschaumstoff aus Polyurethanschaum besteht.

7. Verfahren nach Anspruch 6, dadurch gekennzeichnet, daß dem Polyurethanschaum zusätzliche Haftmittel beigegeben sind.